# EUROPÄISCHE PATENTSCHRIFT

(11) **EP 2 121 177 B1**
(45) Veröffentlichungstag und Bekanntmachung des Hinweises auf die Patenterteilung: **11.01.2012**
(21) Anmeldenummer: 07846701.6
(22) Anmeldetag: 21.11.2007
(51) Int. Cl.: B01J 19/26, C01B 21/28

(54) **VERFAHREN UND EINRICHTUNG ZUR VERHINDERUNG DER KORROSION AN EINEM GASEINTRITTSSTUTZEN BEI EINER SALPETERSÄUREKONDENSATION**
METHOD AND DEVICE FOR PREVENTING CORROSION ON A GAS INLET NOZZLE DURING NITRIC ACID CONDENSATION
PROCÉDÉ ET DISPOSITIF POUR EMPÊCHER LA CORROSION D'UNE TUBULURE D'ENTRÉE DE GAZ LORS D'UNE CONDENSATION D'ACIDE NITRIQUE

(30) Priorität: 13.02.2007 DE 102007006889
(43) Veröffentlichungstag der Anmeldung: 25.11.2009
(73) Patentinhaber: ThyssenKrupp Uhde GmbH, 44141 Dortmund (DE)
(72) Erfinder: MAURER, Rainer, 58332 Schwelm (DE)
(74) Vertreter: Meinke, Dabringhaus und Partner GbR
(86) Internationale Anmeldenummer: PCT/EP2007/010062
(87) Internationale Veröffentlichungsnummer: WO 2008/098600

(56) Entgegenhaltungen:
- WO-A-91/16266
- DE-B- 1 195 280
- US-A- 3 467 498
- US-A- 3 586 055

## Beschreibung

Die Erfindung richtet sich auf ein Verfahren und eine Einrichtung zur Verhinderung der Korrosion an und im Bereich eines Gaseintrittsstutzens bei einer Salpetersäurekondensation.

Bei Salpetersäureanlagen, die unter Hochdruck > 10 bar arbeiten, liegt der Kondensationspunkt der Säure entsprechend hoch bei ca. 120° C. Dies führt insbesondere bei der ersten Gaskühlerstufe zu höheren Korrosionsangriffen an dem Gasstutzen der Eintrittsseite. Besonders an den Übergangszonen zwischen gekühltem Mantel und heißer Stutzenwand tritt vermehrt Säurekondensation mit anschließender Rückverdampfung auf. Die dann bis auf Azeotrop aufkonzentrierte Säure führt dabei zu starken Abtragungsraten des Edelstahlmaterials bis hin zur Leckage.

Hier setzt die Erfindung an, deren Aufgabe darin besteht, den Kontakt des kondensierenden Gases mit dem Stutzen und der Stutzenumgebung zu minimieren.

Mit einem Verfahren der eingangs bezeichneten Art wird diese Aufgabe gemäß der Erfindung dadurch gelöst, dass der Gaseintrittsstutzen im Übergangsbereich zum Inneren des Kondensators auf der Innenseite eine Hülse aufweist, durch die eine Gaseintrittsöffnung in Form eines Ringspaltes ausgebildet wird, wobei der Ringraum mit wenigstens einer Einspeiseöffnung für Sekundärluft versehen ist, so dass sich eine Mantelströmung aus Sekundärluft um das eintretende NO-Gas ausbildet.

Das Vorsehen eines Sekundärluftschleiers auf der Innenwand des Gaseintrittsstutzens verhindert bzw. minimiert in erheblichem Maße den Kontakt des NO-Gases mit dieser Innenwand, wodurch diese entsprechend geschützt ist.

Erfindungsgemäß kann eine derartige Mantelströmung durch Einblasen der Sekundärluft über eine Vielzahl von Eintrittsbohrungen am Gaseintrittsstutzen erzeugt werden.

Ein wesentlicher Vorteil der erfindungsgemäßen Verfahrensweise besteht darin, dass nur ein Teil der über einen Bypass zu dem Kühler geführten Sekundärluft für diese Schutzmaßnahme erforderlich ist, so dass keinerlei Prozessänderungen durch die erfindungsgemäße Vorgehensweise erforderlich sind.

Da das eintretende Gas einen Wasseranteil von ca. 17 % aufweist, der vorwiegend durch das Verbrennungswasser hervorgerufen wird, und der Kondensationspunkt des Wassers bzw. der sich dann sofort bildenden Säure von dem Partialdruck des Wassers abhängig ist, setzt insbesondere bei höheren Gasdrücken die Kondensation bei höheren Temperaturen ein. Durch die vorgeschlagene Maßnahme wird durch den Schleier dann und damit durch die Zugabe der Luft der Wasserdampfpartialdruck entsprechend reduziert bzw. das kondensierende Gas wird vollständig von der Rohrwand ferngehalten, so dass an der Innenseite des druckführenden Stutzens keine Kondensation und damit Säurebildung mehr erfolgen kann.

Erfindungsgemäß lässt sich die obige Aufgabe auch durch eine Einrichtung lösen, die sich dadurch auszeichnet, dass der Gaseintrittsstutzen im Übergangsbereich zum Inneren des Kondensators auf der Innenseite eine Hülse aufweist, durch die eine Gaseintrittsöffnung in Form eines Ringspaltes ausgebildet wird, wobei der Ringraum mit wenigstens einer Einspeiseöffnung für Sekundärluft versehen ist.

Wie oben schon ausgeführt, verdrängt die Sekundärluft das aggressive kondensierende Gas vollständig aus dem Spalt zwischen Innenwand des Stutzens und dem zusätzlichen Rohr mit der Folge, dass sich hier keine Säure bilden kann. Dabei ist der durch das Rohr gebildete innere Stutzen (liner) hinsichtlich eines Säureangriffes geschützt, da die Wandtemperatur durch die heiße Sekundärluft immer oberhalb der Kondensationstemperatur gehalten werden kann.

Ein Zuführstutzen unterschiedlicher Gasströme zu einem Mischraum mit einem von einer ersten Strömung durchflossenen zentrischen Rohr, das von wenigstens einem einen Ringraum bildenden Mantelrohr mit Zuführung einer zweiten Gasströmung umgeben ist, ist für sich gesehen bekannt, hier sei auf die US 3,467,498 oder in vergleichbarer Bauweise auf die US 3,586,055 verwiesen, die sich beide mit der Herstellung von pigmentiertem Metalloxid beschäftigen. Das Verhindern des Kontaktes einer aggressiven Gasströmung mit vor Korrosion zu schützenden Bauteilen durch eine Mantelströmung ist hier nicht angesprochen.

Ausgestaltungen der Erfindung ergeben sich aus den weiteren Unteransprüchen.

Dabei kann vorgesehen sein, dass in Strömungsrichtung des eintretenden NO-Gases stromaufwärts am Gaseintrittsstutzen eine Mehrzahl von Sekundärlufteintrittsöffnungen vorgesehen sind, wobei zweckmäßig diese Sekundärlufteintrittsöffnungen über eine Ringleitung verknüpft und mit der Sekundärluftquelle verbunden sind, wie dies in weiterer Ausgestaltung der Erfindung ebenfalls vorgesehen ist.

Vorteilhafterweise wird die Sekundärluft mit der Sekundärluftquelle einer Hochdrucksalpetersäureanlage verbunden.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Schnittzeichnung aus dem Bereich eines Gaseintrittsstutzens in einen Salpetersäurekondensator sowie in
- Fig. 2: eine Aufsicht, teilweise geschnitten, auf den Gaseintrittsstutzen etwa gemäß Linie II-II in Fig. 1.

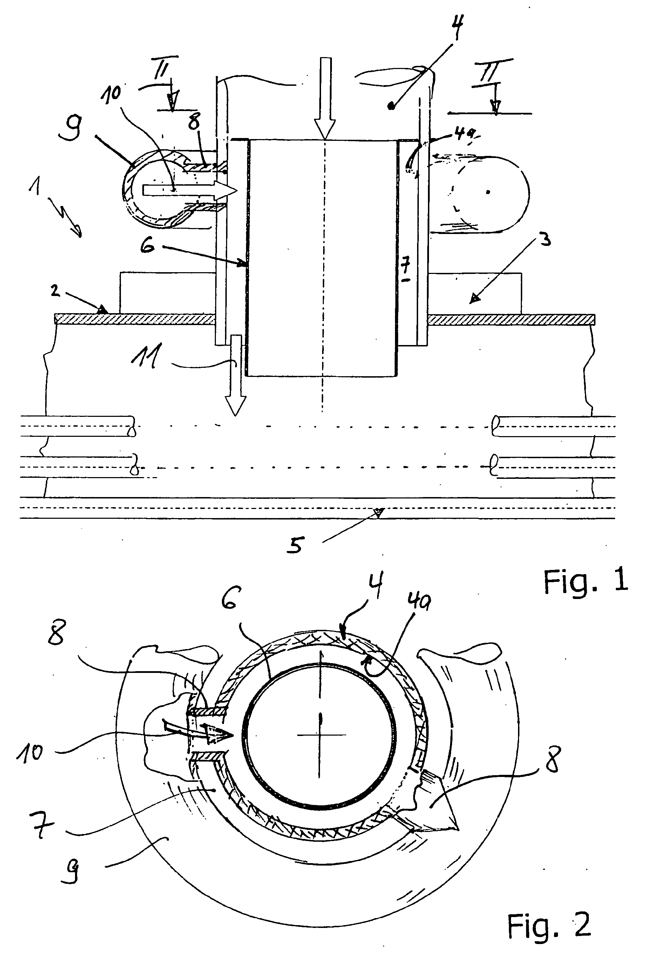

Der allgemein mit 1 bezeichnete Kondensator weist einen Kondensatormantel 2 mit einem gekühlten Mantelbereich 3 auf, der von einem mit 4 bezeichneten Gaseintrittsstutzen für das NO-Gas durchsetzt ist. Die Kühlrohre des Säurekondensators sind in Fig. 1 allgemein mit 5 bezeichnet und teilweise aus Darstellungsgründen weggeschnitten.

Wie sich aus Fig. 1 ergibt, weist der Gaseintrittsstutzen 4 im Übergangsbereich zum Inneren des Kondensators 1 einen Sicherheitsstutzen 6 auf, der einen mit 7 bezeichneten spaltartigen Ringraum zur Innenwand 4a des Gaseintrittsstutzens 4 bildet. Am Umfang verteilt ist der Ringraum 7 mit Sekundärlufteintrittstutzen 8 an einer Ringleitung 9 verbunden, die ihrerseits z.B. mit der Sekundärluftquelle einer Hochdrucksalpetersäureanlage in Verbindung steht, was in den Figuren nicht näher dargestellt ist. Durch den Sekundärlufteintritt, in der Fig. 1 mit einem Pfeil 10 angedeutet, bildet sich eine Mantelströmung 11 zwischen der Innenwand 4a des Gaseintrittsstutzens 4 und dem Sicherheitsstutzen bzw. der -hülse 6.

Da die Sekundärluft in der Regel eine so hohe Temperatur aufweist, dass es nicht zu einer Kondensation des NOₓ-Gases am Sicherheitsstutzen bzw. der -hülse 6 kommt, ist der Sicherheitsstutzen 6 korrosionsmäßig nicht gefährdet.

Natürlich ist das beschriebene Ausführungsbeispiel der Erfindung noch in vielfältiger Hinsicht abzuändern, ohne den Grundgedanken zu verlassen. So ist die Erfindung insbesondere nicht auf Anteile und Verteilung der Sekundärlufteintrittsstutzen und deren Verteilung über den Umfang geschwenkt. Dies gilt auch für die Größe und die Durchmesser der entsprechenden Bauteile ebenso wie für die Spaltbreite des von Sekundärluft durchspülten Spaltes 7.

## Patentansprüche

1. Verfahren zur Verhinderung der Korrosion an und im Bereich eines Gaseintrittsstutzens bei einer Salpetersäurekondensation,
**dadurch gekennzeichnet,**
**dass** der Gaseintrittsstutzen im Übergangsbereich zum Inneren des Kondensators auf der Innenseite eine Hülse aufweist, durch die eine Gaseintrittsöffnung in Form eines Ringspaltes ausgebildet wird, wobei der Ringraum mit wenigstens einer Einspeiseöffnung für Sekundärluft versehen ist, so dass sich eine Mantelströmung aus Sekundärluft um das eintretende NO-Gas ausbildet.

2. Verfahren nach Anspruch 1,
**dadurch gekennzeichnet,**
**dass** der Sekundärluftschleier durch ein Einblasen der Sekundärluft über eine Vielzahl von Eintrittsbohrungen am Gaseintrittsstutzen erzeugt wird.

3. Einrichtung zur Verhinderung der Korrosion an und im Bereich eines Gaseintrittsstutzens bei einer Salpetersäurekondensation,
**dadurch gekennzeichnet,**
**dass** der Gaseintrittsstutzen im Übergangsbereich zum Inneren des Kondensators auf der Innenseite eine Hülse aufweist, durch die eine Gaseintrittsöffnung in Form eines Ringspaltes ausgebildet wird, wobei der Ringraum mit wenigstens einer Einspeiseöffnung für Sekundärluft versehen ist.

4. Einrichtung nach Anspruch 3,
**dadurch gekennzeichnet,**
**dass** in Strömungsrichtung des eintretenden NO-Gases stromaufwärts am Gaseintrittsstutzen (4) eine Mehrzahl von Sekundärlufteintrittsöffnungen (8) vorgesehen sind.

5. Einrichtung nach Anspruch 4,
**dadurch gekennzeichnet,**
**dass** die Sekundärlufteintrittsöffnung (8) über eine Ringleitung (9) verknüpft und mit einer Sekundärluftquelle verbunden sind.

6. Einrichtung nach Anspruch 4 oder 5,
**dadurch gekennzeichnet,**
**dass** der oder die Sekundärlufteintrittsstutzen (8) mit der Sekundärluftquelle einer Hochdrucksalpetersäureanlage verbunden ist.

## Claims

1. Method for preventing corrosion on and in the region of a gas inlet nozzle during nitric acid condensation, **characterised in that** the gas inlet nozzle in the transition region to the interior of the condenser has a sleeve on the inside which forms a gas inlet opening in the form of an annular gap, the annular space being provided with at least one feed opening for secondary air, in such a way that an enveloping flow of secondary air is formed around the incoming NO gas.

2. Method according to claim 1, **characterised in that** the secondary air veil is produced by blowing the secondary air in through a plurality of inlet holes on the gas inlet nozzle.

3. Device for preventing corrosion on and in the region of a gas inlet nozzle during nitric acid condensation, **characterised in that** the gas inlet nozzle in the transition region to the interior of the condenser has a sleeve on the inside which forms a gas inlet opening in the form of an annular gap, the annular space being provided with at least one feed opening for secondary air.

4. Device according to claim 3, **characterised in that** a plurality of secondary air inlet openings (8) are provided upstream in the flow direction of the incoming NO gas on the gas inlet nozzle (4).

5. Device according to claim 4, **characterised in that** the secondary air inlet openings (8) are linked and connected to a source of secondary air via an annular line (9).

6. Device according to either claim 4 or claim 5, **characterised in that** the secondary air inlet nozzle or nozzles (8) are connected to the secondary air source of a high-pressure nitric acid facility.

## Revendications

1. Procédé pour empêcher la corrosion sur et dans la zone d'une tubulure d'entrée de gaz lors d'une condensation d'acide nitrique
**caractérisé en ce que**
la tubulure d'entrée de gaz (4) dans la zone de transition vers l'intérieur du condensateur (1) présente un fourreau (6) sur la face interne, par lequel est formé un orifice d'entrée de gaz en forme d'une fente circulaire, l'espace de forme circulaire (7) étant pourvu d'au moins un orifice d'alimentation pour de l'air secondaire (8), de sorte qu'il se forme un flux enveloppant (11) d'air secondaire autour du gaz NO entrant.

2. Procédé selon la revendication 1
**caractérisé en ce que**
le voile d'air secondaire est engendré par insufflation de l'air secondaire par un grand nombre d'orifices d'entrée (8) sur la tubulure d'entrée de gaz (4).

3. Dispositif pour empêcher la corrosion sur et dans la zone d'une tubulure d'entrée de gaz (4) lors d'une condensation d'acide nitrique
**caractérisé en ce que**
la tubulure d'entrée de gaz (4) dans la zone de transition vers l'intérieur du condensateur présente un fourreau (6) sur la face interne, par lequel est formé un orifice d'entrée (8) de gaz en forme d'une fente circulaire, l'espace circulaire (7) étant muni d'au moins un orifice d'alimentation pour de l'air secondaire (8).

4. Dispositif selon la revendication 3
**caractérisé en ce que**,
en direction du flux de gaz NO entrant, vers le haut, est prévue une multitude d'orifices d'entrée d'air secondaire (8) sur la tubulure d'entrée de gaz (4).

5. Dispositif selon la revendication 4
**caractérisée en ce que**
l'orifice d'entrée d'air secondaire (8) est rattaché par une canalisation annulaire (9) et est relié à une source d'air secondaire.

6. Dispositif selon les revendications 4 ou 5 **caractérisé en ce que**
la ou les tubulure(s) d'entrée d'air secondaire (8) est (sont) reliée(s) avec la source d'air secondaire d'une installation d'acide nitrique sous haute pression.
